# EUROPEAN PATENT APPLICATION

(11) **EP 4 799 867 A1**
(43) Date of publication of application: **02.09.2026**
(21) Application number: 26158580.6
(22) Date of filing: 13.02.2026
(51) Int. Cl.: B60R 3/00, B60R 3/02

(54) **VEHICLE SIDE STEP**

(30) Priority: 28.02.2025 KR 20250026316
(71) Applicant: Daechang Seat Co., Ltd.-Dongtan, Hwaseong-si, Gyeonggi-do 18487 (KR)
(72) Inventor: CHO, Chan Ki, 25305 Pyeongchang-gun (KR); PARK, Gun Young, 17041 Yongin-si (KR); HWANG, Bum Jin, 07584 Seoul (KR); NAM, Hyeong Suk, 16513 Suwon-si (KR); LEE, Se Hwan, 16670 Suwon-si (KR)
(74) Representative: Caspary, Karsten

(57) **Abstract**

Proposed is a vehicle side step that is easy to assemble. The vehicle side step includes: a step plate comprising a first guide groove formed in a longitudinal direction on a lower surface thereof, a second guide groove formed in the longitudinal direction inside the step plate and communicating with an upper portion of the first guide groove, the second guide groove having a width greater than a width of the first guide groove, and an insertion groove formed on the lower surface; a fixing member configured such that, in a state in which an upper portion thereof is accommodated in the second guide groove, a body portion thereof is movable along the first guide groove; and a bracket comprising a coupling plate formed on a first end thereof, and the bracket having a second end coupled to a vehicle.

## Description

### BACKGROUND OF THE INVENTION

### Field of the Invention

The present disclosure relates to a vehicle side step.

### Description of the Related Art

Generally, in the case of sport utility vehicles (SUVs), camping vehicles, or trucks having a relatively high vehicle body, a side step is provided on a lower portion of a side surface of a vehicle to facilitate boarding and alighting of passengers.

Korean Utility Model Registration No. 20-0425588 discloses a bracket assembly for a vehicle side step.

In the disclosed bracket assembly for a vehicle side step, the bracket assembly mounted to a lower frame of a vehicle body having a flange formed along a longitudinal direction on a lower surface thereof and configured to fix a side step plate to a lower side portion of the vehicle body, the bracket assembly includes: a frame fixing portion mounted to a side surface of the lower frame of the vehicle body through mounting bolts; a step plate seating portion extending outward from a lower end of the frame fixing portion and configured to seat and fix the side step plate; a main bracket integrally provided with a corner portion bent from the lower end of the frame fixing portion to form the step plate seating portion; a sub-bracket integrally provided with a mounting portion having an upper end contacting a first side surface of the flange and a lower end bent at an acute angle to be mounted on an upper surface of the corner portion of the main bracket; and a fixing plate having an upper end contacting a second side surface of the flange and bolted to the sub-bracket to prevent sagging of the corner portion of the main bracket.

In the above-described bracket assembly for a vehicle side step, since coupling holes of the bracket are not visible during assembly of the step plate to the bracket, an assembler must work while lying on the ground. In addition, since the above-described bracket assembly for a vehicle side step always protrudes laterally from a vehicle, damage occurs frequently and aesthetic appearance is deteriorated.

### Document of Related Art

(Patent Document 1) Korean Utility Model Registration No. 20-0425588 (published on September 5, 2006)

### SUMMARY OF THE INVENTION

Accordingly, the present disclosure has been made keeping in mind the above problems occurring in the related art, and the present disclosure is intended to provide a vehicle side step that is easy to assemble.

In order to achieve the objectives of the present disclosure, according to an embodiment, there is provided a vehicle side step including: a step plate comprising a first guide groove formed in a longitudinal direction on a lower surface thereof, a second guide groove formed in the longitudinal direction inside the step plate and communicating with an upper portion of the first guide groove, the second guide groove having a width greater than a width of the first guide groove, and an insertion groove formed on the lower surface to be adjacent to the first guide groove and communicating with the second guide groove; a fixing member configured such that, in a state in which an upper portion thereof is accommodated in the second guide groove, a body portion thereof is movable along the first guide groove, wherein when the upper portion descends and is inserted into the insertion groove, the fixing member is fixed to the step plate; and a bracket comprising a coupling plate formed on a first end thereof, the coupling plate having a coupling opening to which the body portion of the fixing member is coupled, and the bracket having a second end coupled to a vehicle.

In addition, the fixing member of the vehicle side step according to the embodiment may include: a body having a box shape with an open upper portion and being coupled to the coupling opening; a support plate configured to cover the upper portion of the body; a rod configured to penetrate the body and the support plate and to be movable upward and downward with an upper portion thereof exposed; and a fixing hook coupled to the upper portion of the rod and having an end portion oriented downward, wherein the end portion of the fixing hook may be inserted into the insertion groove when the fixing hook descends in a state in which the fixing hook is accommodated in the second guide groove.

In addition, the fixing member of the vehicle side step according to the embodiment may further include an elastic member provided on an outer circumferential surface of the rod and configured to elastically support the rod.

In addition, the body of the vehicle side step according to the embodiment may include a locking protrusion provided on an outer side surface of the body, the body being engaged with the coupling plate by the locking protrusion.

In addition, the coupling plate of the vehicle side step according to the embodiment may further include a fixing hole which is formed to be adjacent to the coupling opening and into which the end portion of the fixing hook is inserted.

According to the vehicle side step according to an embodiment, the fixing hook of the fixing member moves along the second guide groove of the step plate and is automatically lowered by the elastic member to be coupled to the insertion groove of the step plate. As a result, an operator does not need to separately locate a bolt hole for coupling the step plate, and does not need to work while lying on the ground, thereby improving workability.

In addition, according to the vehicle side step according to an embodiment, the fixing hole into which the end portion of the fixing hook is inserted is formed in the coupling plate to which the fixing member is coupled. As a result, the step plate is more securely coupled to the bracket.

In addition, according to the vehicle side step according to an embodiment, the locking protrusion that is engaged with the coupling plate is formed on the outer side surface of the body. As a result, the fixing hook and the locking protrusion are engaged with the coupling plate, such that the fixing hook is prevented from being separated from the coupling plate during a process of coupling the fixing member and the step plate.

In addition, according to the vehicle side step according to an embodiment, the insertion groove of the step plate, into which the fixing hook of the fixing member is inserted, may include a plurality of insertion grooves formed along the longitudinal direction of the step plate. As a result, adjustment of a coupling position of the step plate is facilitated, and the step plate is not affected by spacing between brackets coupled to a vehicle.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a perspective view of a vehicle side step according to an embodiment of the present disclosure;
FIGS. 2 and 3 are exploded views of the vehicle side step according to the embodiment of the present disclosure;
FIGS. 4A and 4B are perspective views of a fixing member; and
FIGS. 5 to 8 illustrate a process of assembling the vehicle side step according to the embodiment of the present disclosure.

### DETAILED DESCRIPTION OF THE INVENTION

The advantages and features of the present disclosure and methods of achieving them will become apparent with reference to embodiments described in detail below in conjunction with the accompanying drawings. However, the present disclosure is not limited to the embodiments disclosed below and may be embodied in various different forms, and the embodiments are provided only to complete the present disclosure and to fully inform a person having ordinary skill in the art of the scope of the present disclosure. The present disclosure is defined only by the scope of the claims. Throughout the specification, the same reference numerals refer to the same components.

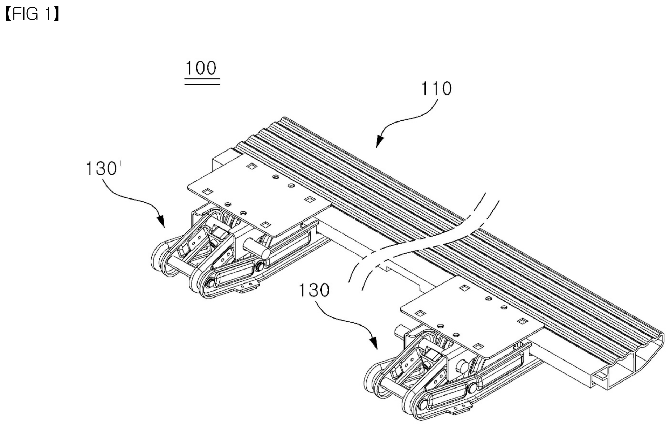

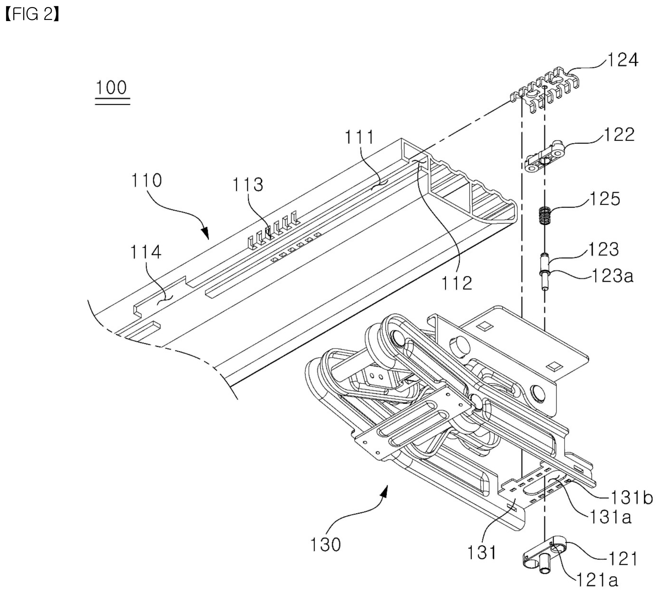

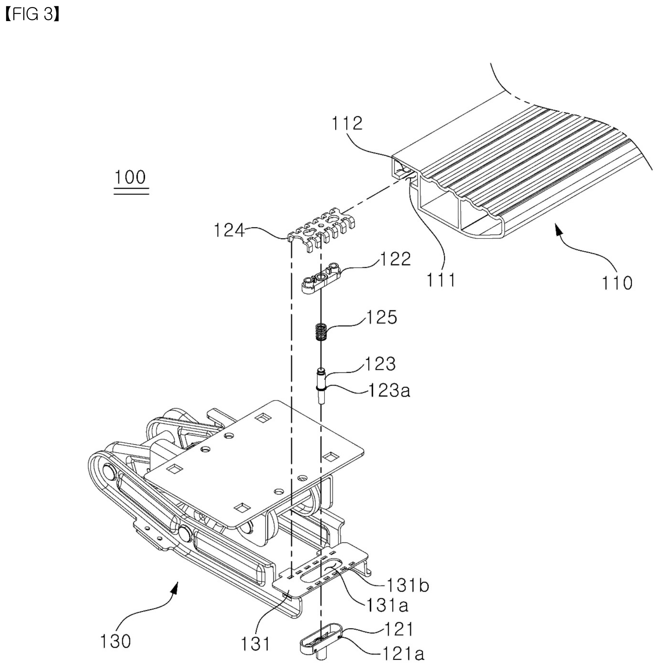

Referring to FIG. 1, which is a perspective view of a side step 100 for a vehicle [hereinafter referred to as "the vehicle side step 100"] according to an embodiment, and referring to FIGS. 2 and 3, which are exploded views of the vehicle side step 100, the vehicle side step 100 includes a step plate 110, a fixing member 120, and a bracket 130.

The step plate 110 has a predetermined length and is formed of a material capable of supporting a human load. The step plate 110 includes a first guide groove 111, a second guide groove 112, and an insertion groove 113.

The first guide groove 111 is formed on the lower surface of the step plate 110 in a longitudinal direction thereof. As one example, the first guide groove 111 may be formed on one side in a width direction of the step plate 110 in the longitudinal direction of the step plate 110.

The second guide groove 112 is formed in the longitudinal direction inside the step plate 110 and communicates with an upper portion of the first guide groove 111, and has a width greater than that of the first guide groove 111. That is, the second guide groove 112 is positioned inside the step plate 110, and, with reference to a vertical cross section in the longitudinal direction of the step plate 110, the first guide groove 111 and the second guide groove 112 are formed in an inverted " 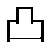 "-shaped form.

The insertion groove 113 is formed on a lower surface of the step plate 110 to be adjacent to the first guide groove 111 and communicates with the second guide groove 112. In addition, the insertion groove 113 may include a plurality of insertion grooves 113 formed so as to correspond to spacing between brackets 130 coupled to a vehicle.

In addition, the step plate 110 may further include an insertion opening 114.

The insertion opening 114 may be formed on the lower surface of the step plate 110 to have a length greater than a length of the fixing member 120 to be described later. The insertion opening 114 communicates with the first guide groove 111 and the second guide groove 112, and functions as an entrance through which the upper portion of the fixing member 120 is inserted into the second guide groove 112.

In addition, a non-slip pad (not shown) for preventing slipping may be provided on an upper surface of the step plate 110, or grooves may be formed on the upper surface of the step plate 110.

The fixing member 120 includes a body 121, a support plate 122, a rod 123, and a fixing hook 124.

The body 121 has a size capable of being received in the first guide groove 111 and has a box shape with an open upper portion. As one example, the body 121 may have a slot-shaped box shape with an open upper portion.

In addition, the body 121 may include a locking protrusion 121a.

The locking protrusion 121a may include a plurality of locking protrusions 121a provided along the outer side surface of the body 121, and allow the body 121 to be engaged with a coupling plate 131 of the bracket 130 to be described later.

The support plate 122 is formed to cover the upper portion of the body 121.

The rod 123 configured to penetrate the body 121 and the support plate 122 and to be movable upward and downward with the upper portion thereof exposed.

The fixing hook 124 is coupled to the upper surface of the support plate 122 and has an end portion thereof extending outward and oriented downward. As one example, the fixing hook 124 may be formed such that end portions thereof extend outward from opposite sides of the upper surface of the support plate 122 and then are oriented downward.

In addition, the fixing member 120 may further include an elastic member 125.

The elastic member 125 is provided on an outer circumferential surface of the rod 123 to elastically support the rod 123. As one example, a first end of the elastic member 125 may be supported by a lower surface of the support plate 122, and a second end of the elastic member 125 may be supported by a flange 123a protruding from the outer circumferential surface of the rod 123.

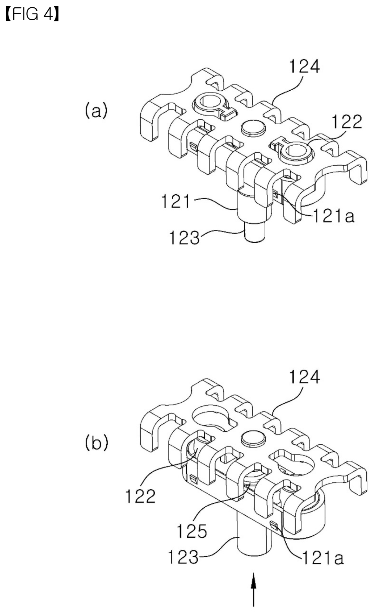

An operation of the fixing member 120 will be described with reference to FIGS. 4A and 4B, which are perspective views of the fixing member 120.

FIG. 4A illustrates a state in which no external force is applied to the fixing member 120.

In this state, the fixing hook 124 is supported on the upper surface of the support plate 122.

FIG. 4B illustrates a state in which the rod 123 is pushed upward by an external force applied upward to the fixing member 120.

In this state, the upper end of the rod 123 is raised by the external force applied upward, such that the fixing hook 124 is positioned to be spaced apart upward from the support plate 122.

Referring again to FIGS. 2 and 3, the bracket 130 includes the coupling plate 131 formed on a first end thereof, and a second end of the bracket 130 is coupled to a lower portion of a side surface of a vehicle (not shown). The bracket 130 may be hingedly configured such that the first end thereof protrudes laterally from the vehicle or is positioned under the vehicle.

The coupling plate 131 includes a coupling opening 131a for coupling the fixing member 120 thereto.

The coupling opening 131a is formed through the coupling plate 131 to have a shape corresponding to the body 121 of the fixing member 120.

In addition, the coupling plate 131 may include fixing holes 131b.

Each of the fixing holes 131b is formed through the coupling plate 131 along an outer periphery of the coupling opening 131a to have a shape corresponding to an end portion of the fixing hook 124.

In addition, the bracket 130 may include a plurality of brackets provided along the side surface of a vehicle.

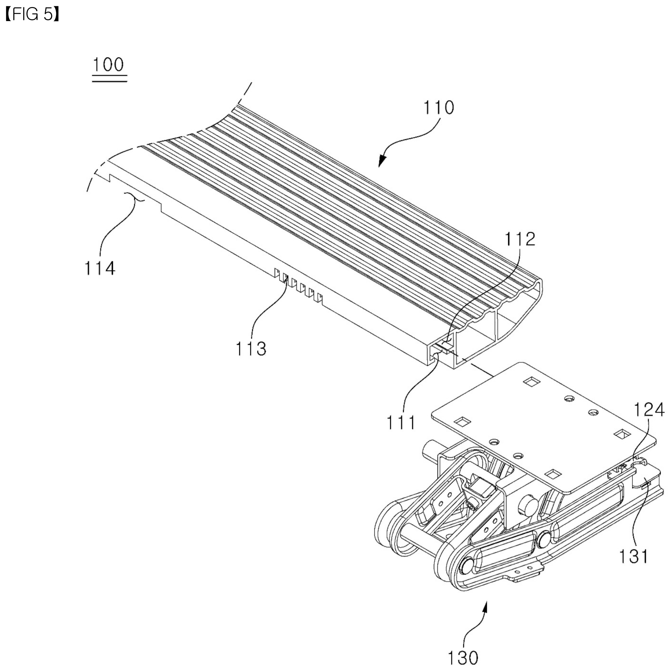

A process of assembling the vehicle side step 100 will be described with reference to FIGS. 5 to 8.

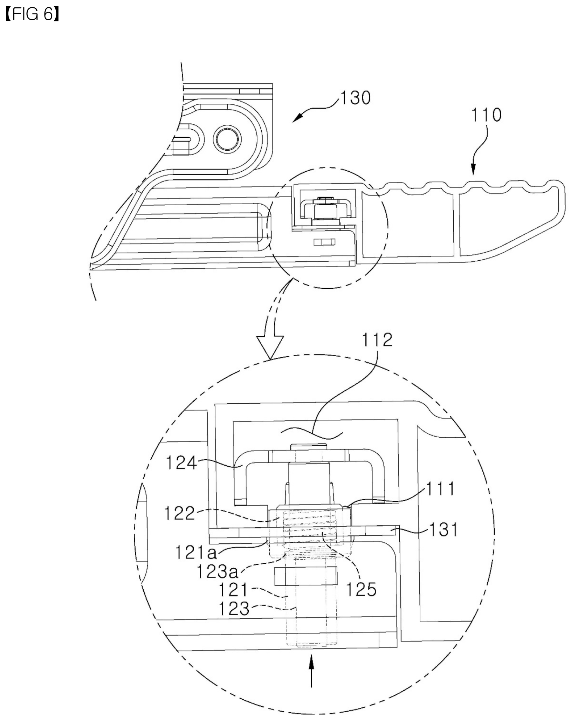

FIG. 5 is a perspective view illustrating a state before the fixing member 120 is inserted into the first guide groove 111 and the second guide groove 112 of the step plate 110, and FIG. 6 is a side view of FIG. 5.

Referring to FIGS. 5 and 6, the body 121 of the fixing member 120 is coupled to the coupling plate 131 of the bracket 130, and the fixing hook 124 is raised from the body 121 by the rod 123. In this case, the body 121 is prevented from being separated from the coupling plate 131 by the locking protrusion 121a. Subsequently, the body 121 is inserted into the first guide groove 111 such that the end portion of the fixing hook 124 is in contact with the lower portion of the second guide groove 112.

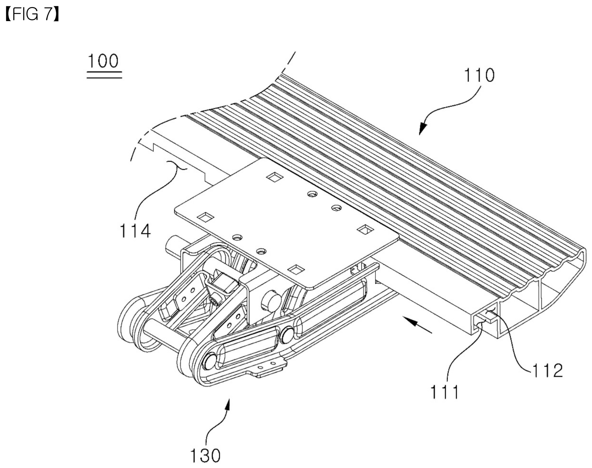

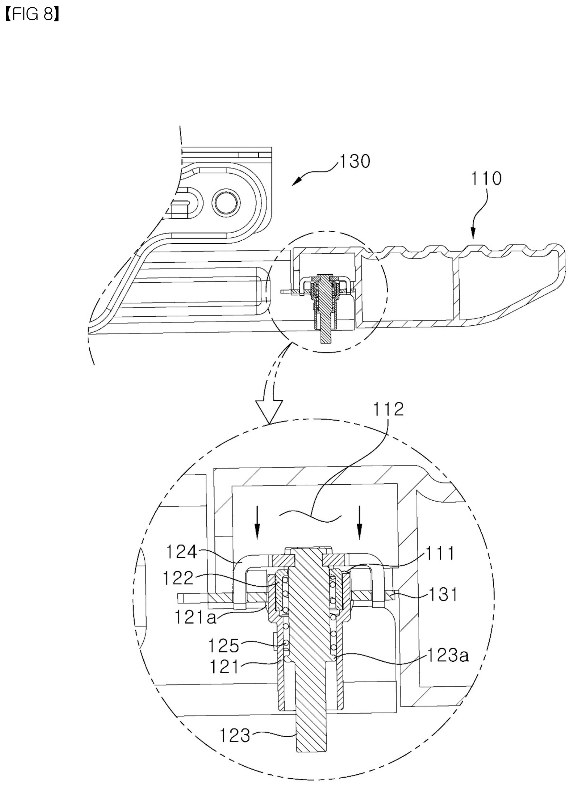

FIGS. 7 and 8 respectively illustrate a perspective view and a cross-sectional view showing a state in which the fixing hook 124 of the fixing member 120 is coupled to the insertion groove 113 of the step plate 110.

Referring to FIGS. 7 and 8, the body 121 of the fixing member 120 is moved along the first guide groove 111 and positioned above the insertion groove 113 of the step plate 110. When the end portion of the fixing hook 124 is accurately aligned with the insertion groove 113, the fixing hook 124 is lowered by the elastic member 125 and is inserted into the insertion groove 113. As a result, the fixing member 120 is coupled to the step plate 110. In addition, the end portion of the fixing hook 124 is inserted into the fixing opening 131b of the coupling plate 131, such that the step plate 110 and the fixing member 120 are securely fixed to the bracket 130.

Expressions (terms, visualized images, and the like) used in describing embodiments of the present disclosure are merely selected for instrumental purposes to facilitate understanding of the technology.

In addition, the present disclosure has been described with reference to a limited number of embodiments due to practical circumstances, and a person having ordinary skill in the art will be able to devise new embodiments based on the described embodiments without departing from the technical spirit of the present disclosure.

Accordingly, the scope of the claims of the present disclosure should not be limited by certain expressions shown in the "Detailed Description" and the "Drawings," but should be interpreted broadly on the basis of the essential technical spirit inherent throughout the specification.

## Claims

1. A vehicle side step comprising:
a step plate comprising a first guide groove formed in a longitudinal direction on a lower surface thereof, a second guide groove formed in the longitudinal direction inside the step plate and communicating with an upper portion of the first guide groove, the second guide groove having a width greater than a width of the first guide groove, and an insertion groove formed on the lower surface to be adjacent to the first guide groove and communicating with the second guide groove;
a fixing member configured such that, in a state in which an upper portion thereof is accommodated in the second guide groove, a body portion thereof is movable along the first guide groove, wherein when the upper portion descends and is inserted into the insertion groove, the fixing member is fixed to the step plate; and
a bracket comprising a coupling plate formed on a first end thereof, the coupling plate having a coupling opening to which the body portion of the fixing member is coupled, and the bracket having a second end coupled to a vehicle.

2. The vehicle side step of claim 1, wherein the fixing member comprises:
a body having a box shape with an open upper portion and being coupled to the coupling opening;
a support plate configured to cover the upper portion of the body;
a rod configured to penetrate the body and the support plate and to be movable upward and downward with an upper portion thereof exposed; and
a fixing hook coupled to the upper portion of the rod and having an end portion oriented downward,
wherein the end portion of the fixing hook is inserted into the insertion groove when the fixing hook descends in a state in which the fixing hook is accommodated in the second guide groove.

3. The vehicle side step of claim 2, wherein the fixing member further comprises an elastic member provided on an outer circumferential surface of the rod and configured to elastically support the rod.

4. The vehicle side step of claim 2, wherein the body comprises a locking protrusion provided on an outer side surface of the body, the body being engaged with the coupling plate by the locking protrusion.

5. The vehicle side step of claim 2, wherein the coupling plate further comprises a fixing hole which is formed to be adjacent to the coupling opening and into which the end portion of the fixing hook is inserted.
